(19) Europäisches Patentamt
European Patent Office
Office européen des brevets

(11) **EP 4 618 267 A1**

(12) **EUROPEAN PATENT APPLICATION**
published in accordance with Art. 153(4) EPC

(43) Date of publication:
**17.09.2025 Bulletin 2025/38**

(21) Application number: **23888111.4**

(22) Date of filing: **10.11.2023**

(51) International Patent Classification (IPC):
*H01M 50/15* (2021.01)    *H01M 50/184* (2021.01)
*H01M 50/188* (2021.01)

(52) Cooperative Patent Classification (CPC):
Y02E 60/10

(86) International application number:
**PCT/CN2023/130946**

(87) International publication number:
**WO 2024/099426 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022  CN 202211416056**

(71) Applicants:
• **Shenzhen Hithium Energy Storage
  Technology Co., Ltd.
  Shenzhen, Guangdong 518110 (CN)**
• **Xiamen Hithium Energy Storage Technology Co.,
  Ltd.
  Xiamen, Fujian 361100 (CN)**

(72) Inventors:
• **LIANG, Jinyun**
  Xiamen, Fujian 361100 (CN)
• **ZHANG, Liangliang**
  Xiamen, Fujian 361100 (CN)
• **ZHANG, Wancai**
  Xiamen, Fujian 361100 (CN)
• **WANG, Feng**
  Xiamen, Fujian 361100 (CN)

(74) Representative: **RGTH
Patentanwälte PartGmbB
Neuer Wall 10
20354 Hamburg (DE)**

(54) **END COVER ASSEMBLY, ENERGY STORAGE APPARATUS AND ELECTRICAL DEVICE**

(57) The present disclosure discloses an end cover assembly, an energy storage device and electrical equipment. The end cover assembly includes an end cover provided with an outlet hole penetrating therethrough, an electrode terminal arranged on one side of the end cover, a sealing member including a first sealing portion and a plastic member including a first plastic portion. A projection, on the end cover of the electrode terminal along a thickness direction of the end cover covers the outlet hole, and a first gap surrounding the outlet hole is formed between the electrode terminal and the end cover. The first sealing portion fills one side of the first gap close to the outlet hole. The first plastic portion fills one side of the first gap away from the outlet hole; and a second gap is formed between the first sealing portion and the first plastic portion. The formation of the second gap can effectively isolate the sealing member from the plastic member, thereby preventing mutual pressing and more importantly preventing the sealing member from being burnt and damaged by a high temperature generated by the plastic member that has been just formed, to prolong a service life of the sealing member.

**FIG. 1**

## Description

### CROSS-REFERENCE TO RELATED APPLICATION

The application claims priority of Chinese patent application CN202211416056.6, filed on November 11, 2022, entitled "End Cover Assembly, Energy Storage Device And Electrical Equipment", which is incorporated herein by reference in its entireties.

### TECHNICAL FIELD

The present disclosure relates to the technical field of battery assembling, and in particular, to an end cover assembly, an energy storage device and electrical equipment.

### BACKGROUND

A power battery is an energy storage device commonly used in the technical field of new energy at present. It is widely used in equipment such as an electric vehicle, has the advantages of energy conservation and environmental protection, and is also a development trend of future new energy. In related technologies, in order to ensure stability of connection, a sealing member for sealing would be arranged at a gap between an electrode terminal and an end cover in a battery to prevent external stains from entering the battery to cause abnormalities such as pollution and battery short circuit.

However, during assembling of a battery, all components easily press each other. Especially when the sealing member and a injection-molded member press and contact each other, an extremely high temperature of the injection-molded member easily burns and damages the sealing member.

### SUMMARY

Embodiments of the present disclosure disclose an end cover assembly, an energy storage device and electrical equipment, which can solve the problem in the related technology that a sealing member in a battery is easily burnt and damaged by a injection-molded member.

In order to achieve the above object, in a first aspect, the present disclosure discloses an end cover assembly, comprising: an end cover, provided with an outlet hole penetrating therethrough; an electrode terminal, arranged on one side of the end cover, wherein a projection, on the end cover, of the electrode terminal along a thickness direction of the end cover covers the outlet hole, and a first gap surrounding the outlet hole is formed between the electrode terminal and the end cover; a sealing member, comprising a first sealing portion, wherein the first sealing portion fills one side of the first gap close to the outlet hole; and an injection-molded member, comprising a first injection-molded portion, wherein the first injection-molded portion fills one side of the first gap away from the outlet hole; and a second gap is formed between the first sealing portion and the first injection-molded portion.

In the second aspect, the present disclosure discloses an energy storage device, comprising: a housing, having an opening at one end thereof; an electrode assembly, accommodated in the housing; and the end cover assembly, wherein the end cover assembly hermetically covers the opening of the housing.

In the third aspect, the present disclosure discloses an electrical equipment, comprising the energy storage device.

Compared with the prior art, the present disclosure has the beneficial effects below:

In the present disclosure, the end cover assembly is structurally optimized. Specifically, the end cover assembly comprises an end cover, provided with an outlet hole penetrating therethrough; an electrode terminal, arranged on one side of the end cover, wherein a projection, on the end cover, of the electrode terminal along a thickness direction of the end cover covers the outlet hole, and a first gap surrounding the outlet hole is formed between the electrode terminal and the end cover; a sealing member, comprising a first sealing portion which fills one side of the first gap close to the outlet hole; a injection-molded member, comprising a first injection-molded portion, wherein the first injection-molded portion fills one side of the first gap away from the outlet hole, and a second gap is formed between the first sealing portion and the first injection-molded portion. In this way, the formation of the second gap can effectively isolate the sealing member from the injection-molded member, thereby preventing the sealing member from being burnt and damaged by a high temperature generated by a injection-molded member that has been just formed, and prolonging a service life of the sealing member.

### BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.

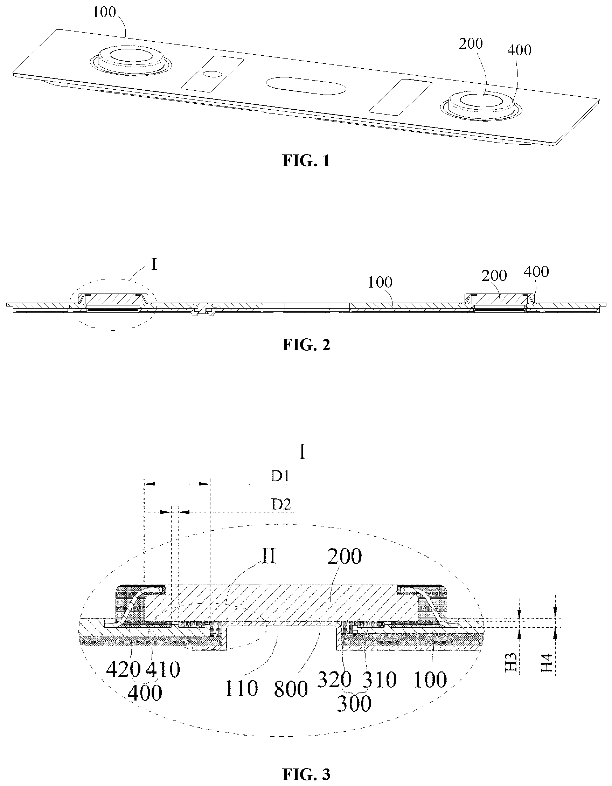

FIG. 1 is a structural diagram of an end cover assembly disclosed by the present disclosure;
FIG. 2 is a half sectional diagram of an end cover assembly disclosed by the present disclosure;
FIG. 3 is an enlarged diagram of a portion I of FIG. 2 disclosed by the present disclosure;

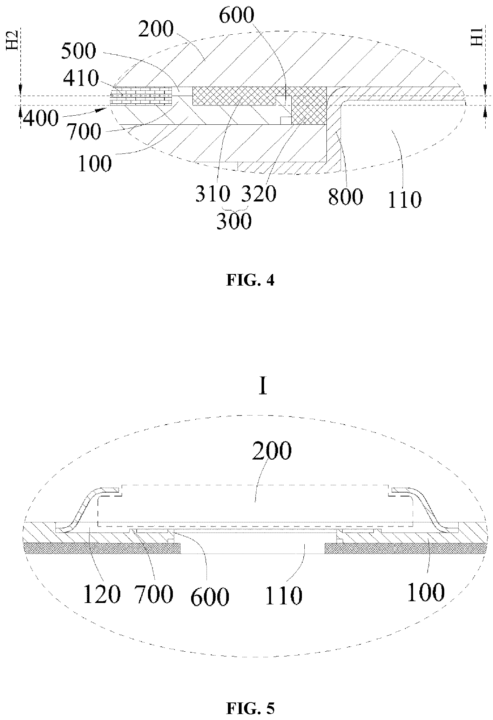

FIG. 4 is a first enlarged diagram of a portion II of FIG. 3 disclosed by the present disclosure; and
FIG. 5 is a structural diagram in the enlarged diagram of the portion I of FIG. 2 disclosed by the present disclosure, where only an end cover remains.

Numerals in the drawings:

   100: end cover;
   110: outlet hole; 120: concave portion;
   200: electrode terminal;
   300: sealing member;
   310: first sealing portion; 320: second sealing portion;
   400: injection-molded member;
   410: first injection-molded portion; 420: second injection-molded portion;
   500: second gap;
   600: first protrusion;
   700: second protrusion; and
   800: connection sheet.

## DETAILED DESCRIPTION OF EMBODIMENTS

The accompanying drawings in the embodiment of the present disclosure are combined, The technical scheme in the embodiment of the present disclosure is clearly and completely described, Obviously, the described embodiment is only a part of the embodiment of the utility model, but not all embodiments are based on the embodiment of the utility model, and all other embodiments obtained by ordinary technicians in the field on the premise of not doing creative work belong to the protection range of the present.

In the present disclosure, the terms "upper" and the like indicate azimuth or positional relationships based primarily on the azimuth or positional relationships shown in the drawings, not intended to define the indicated device, element or component must have a particular orientation, or be constructed and operated in a particular orientation.

Furthermore, the above-described partial terms may be used in addition to indicating azimuth or positional relationships. It may also be used to refer to other meanings, such as the term "above" in some cases may also be used to refer to certain dependencies or connectivity. The specific meanings of these terms in the present disclosure will be understood by those of ordinary skill in the art as the case may be.

In addition, the terms "mounted", "disposed", "provided", and "connected" are to be construed broadly to mean, for example, a fixed connection, a detachable connection, or an integral construction; It may be a mechanical connection, or an electrical connection; The specific meaning of the above-mentioned terms in the present disclosure will be understood by those of ordinary skill in the art as the case may be, either directly, or indirectly, via an intermediate medium, or internal communication between two devices, elements, or components. The specific meanings of these terms in the present disclosure will be understood by those of ordinary skill in the art as the case may be.

In addition, the terms "first", "second", etc., are used primarily to distinguish different devices, elements or components (the specific type and construction may be the same or different) and are not used to indicate or imply the relative importance or quantity of the indicated device, element or component. Unless otherwise stated, "plurality" means two or more.

In a related technology, in order to ensure stability of connection, an electrode terminal in a battery and an end cover will be connected in an injection manner. At the same time, a sealing member for sealing will be provided. However, during assembling of the battery, the sealing member and a injection-molded member easily press each other. Furthermore, it still possible that the injection-molded member that has been just formed may damage the sealing member due to its extremely high temperature. In order to solve this problem, the present disclosure discloses an end cover assembly, which will be described in detail below.

The end cover assembly of the present disclosure may comprise: an end cover 100, an electrode terminal 200, a sealing member 300 and a injection-molded member 400. The end cover 100 is a setting base for the end cover assembly. The end cover 100 may be provided with an outlet hole 110 penetrating therethrough, so that a conductive component can transfer electric energy. The electrode terminal 200 may be arranged on one side of the end cover 100, and a projection, on the end cover 100, of the electrode terminal 200 along a thickness direction of the end cover 100 covers the outlet hole 110. A first gap surrounding the outlet hole 110 is formed between the electrode terminal 200 and the end cover 100. The electrode terminal 200 serves as one conductive component in the end cover assembly, and can be connected to an electrode assembly of an energy storage device through a connection sheet 800 below, thereby realizing electrical conduction.

The sealing member 300 is used for achieving sealing. Specifically, the sealing member 300 may comprise a first sealing portion 310. The first sealing portion 310 fills one side of the first gap close to the outlet hole 110.

The injection-molded member 400 is used for realizing injection connection between the end cover 100 and the electrode terminal 200 to improve structural stability of the end cover assembly. Specifically, the injection-molded member 400 may comprise a first injection-molded portion 410. The first injection-molded portion 410 fills one side of the first gap away from the outlet hole 110. A second gap 500 is formed between the first sealing portion 310 and the first injection-molded portion 410.

In the present disclosure, the first injection-molded portion 410 and the first sealing portion 310 are spaced apart from each other to form the second gap 500. The formation of the second gap 500 can effectively isolate the sealing member 300 from the injection-molded member 400, thereby preventing mutual pressing and more importantly preventing the sealing member 300 from being burnt and damaged by a high temperature generated by the injection-molded member 400 that has been just formed, to prolong a service life of the sealing member 300.

Optionally, the injection-molded member 400 and the sealing member 300 may be both configured to be annular, to improve the structural stability. Similarly, the first gap and second gap 500 can also be formed as annular band gaps, which will not be described in detail here.

Optionally, the sealing member 300 may be made of silica gel or another material, to ensure a good sealing property.

Optionally, along a radial direction of the electrode terminal 200, a size of the first gap is D1, and a size of the second gap 500 is D2, where 0.2≤D2/D1≤0.3, for example, D2/D1=0.21, 0.25 and 0.29.

In the present disclosure, the second gap 500 with an extremely small size cannot achieve an effect of isolating the injection-molded member 400 from the sealing member 300, and the second gap 500 with an extremely large size occupies a larger portion of the first gap, which affects a proportion of the injection-molded member 400 in the first gap, thus affecting an injection connection effect between the end cover 100 and the electrode terminal 200, and affects a proportion of the sealing member 300 in the first gap, thus affecting the sealing property of the sealing member 300. Therefore, a ratio of the first gap to the second gap 500 can be controlled to 0.2≤D2/D1≤0.3 to enable the second gap 500 to guarantee a better isolation effect, without affecting the injection connection performance of the injection-molded member 400 and the sealing property of the sealing member 300.

Optionally, along the radial direction of the electrode terminal 200, 1.1 mm<D2<1.3 mm, for example, D2=1.11 mm, 1.25 mm and 1.29 mm. In this way, the size of the second gap 500 can be further controlled, so that the second gap can better exert the isolation effect, and the impact on the injection connection performance and the sealing property is avoided.

Optionally, an edge of one side of the first gap close to the outlet hole 110 may be provided with a first protrusion 600. The first protrusion 600 is connected to the end cover 100.

A second protrusion 700 may be arranged in the second gap 500. The second protrusion 700 is connected to the end cover 100 and/or the electrode terminal 200. For example, the second protrusion 700 is connected to the end cover 100, or the second protrusion 700 is connected to the electrode terminal 200, or the end cover 100 and the electrode terminal 200 are both connected with the second protrusion 700.

The first sealing portion 310 is located between the first protrusion 600 and the second protrusion 700.

Based on the arrangement of the second protrusion 700, the sealing member 300 and the injection-molded member 400 can be isolated more effectively, which further ensures the stability of the formed second gap 500 and ensures the service life of the sealing member 300/ the second protrusion 700 may cooperate with the first protrusion 600 to better achieve limitation to the sealing member 300 and prevent the sealing member 300 from failing in sealing due to an abnormal movement.

Optionally, if the first protrusion 600 and the second protrusion 700 are too high, mounting interference will be caused, so that the electrode terminal 200 presses the first protrusion 600 and the second protrusion 700 during mounting, resulting in a failure in mounting in place. If the first protrusion 600 and the second protrusion 700 are too low, the sealing member 300 and the injection-molded member 400 may not be effectively isolated, and the sealing member 300 cannot be effectively limited.

Therefore, along an axial direction of the electrode terminal 200, a size of the first protrusion 600 is H1, and a size of the second protrusion 700 is H2. It can be set that 0.1 mm<H1<0.3 mm, for example, H1=0.11 mm, 0.2 mm and 0.28 mm; and that 0.1 mm<H2<0.3 mm, for example, H2=0.11 mm, 0.2 mm and 0.28 mm.

In this way, the first protrusion 600 and the second protrusion 700 can ensure that the sealing member 300 from the injection-molded member 400 are effectively isolated and that the sealing member 300 is effectively positioned while the mounting interference is avoided.

Optionally, the sealing member 300 may further comprise a second sealing portion 320. The second sealing portion 320 and the first sealing portion 310 are integrated formed by injection molding to ensure the structural stability. The second sealing portion 320 abuts against an inner surface of the outlet hole 110.

As mentioned above, sealing between the end cover 100 and the electrode terminal 200 can be achieved by using the first sealing portion 310. The second sealing portion 320 and the outlet hole 110 cooperate with each other, which can limit the sealing member 300 in the radial direction of the electrode terminal 200 and prevent the abnormal movement of the first sealing portion 310 towards the injection-molded member 400, thereby improving position stability of the sealing member 300 and more effectively preventing contact between the sealing member 300 and the injection-molded member 400.

Meanwhile, based on the arrangement of the second sealing portion 320, a region located between the outlet hole 110 and the connection sheet 800 can also be sealed. Specifically, the connection sheet 800 is provided with a convex portion. The convex portion is arranged at the outlet hole 110 to be electrically connected to the electrode terminal 200. The second sealing portion 320 is located between a surface of the outlet hole 110 and a peripheral surface of the connection sheet 800.

The connection sheet 800 is usually arranged on one side of the outlet hole 110 that faces a housing of the energy storage device, so as to be electrically connected to a cell in the housing, thereby realizing electrical conduction of the energy storage device. The second sealing portion 320 is arranged between the connection sheet 800 and the outlet hole 110, which can prevent seepage of electrolyte in the housing towards one side of the outlet hole 110 and further improve the sealing property.

Optionally, along the thickness direction of the end cover 100, one end of the second sealing portion 320 away from the first sealing portion 310 can be extended out of the outlet hole 110. An exiting direction of the second sealing portion 320 is along an axial direction of the outlet hole 110. It can be seen that the second sealing portion 320 extends out of the outlet hole 110, so that the second sealing portion 320 can completely cover the outlet hole 110. In this way, the second sealing portion 320 can more effectively prevent the convex portion of the connection sheet 800 from being in contact with the outlet hole 110, so as to avoid abnormal phenomena such as a short circuit.

Optionally, the injection-molded member 400 further comprises a second injection-molded portion 420. The second injection-molded portion 420 and the first injection-molded portion 410 are integrated formed by injection molding. The second injection-molded portion 420 surrounds a peripheral surface of the electrode terminal 200.

As mentioned above, the first injection-molded portion 410 can realize injection connection between the end cover 100 and the electrode terminal 200. The second injection-molded portion 420 can cooperate with the electrode terminal 200 to limit the injection-molded member 400 in the radial direction of the electrode terminal 200 and prevent a transverse movement of the injection-molded member 400, which more effectively ensures the position stability of the second gap 500. At the same time, the arrangement of the second injection-molded portion 420 can also make the connection between the injection-molded member 400 and the electrode terminal 200 more stable.

Optionally, a concave portion 120 can be formed in a surface of one side of the end cover 100 that faces the electrode terminal 200, and the outlet hole 110 is formed in a bottom of the concave portion 120. Projections, on the end cover 100, of the electrode terminal 200 and the injection-molded member 400 along the thickness direction of the end cover 100 are located in the concave portion 120, so that the first gap is formed between the electrode terminal 200 and the bottom of the concave portion 120.

It can be seen that this structural design of the concave portion 120 can receive the electrode terminal 200 and the injection-molded member 400, and limit, in the radial direction of the electrode terminal 200, a whole formed by the electrode terminal 200 and the injection-molded member 400, thereby ensuring that the overall structure is more stable and better preventing the sealing member 300 from being in contact with the injection-molded member 400.

Optionally, in the thickness direction of the end cover 100, a ratio of a thickness H3 of the first gap to a depth H4 of the concave portion 120 is 0.5≤H3/H4≤0.8, for example, H3/H4=0.51, 0.6, 0.7 and 0.78.

If the ratio of H3/H4 is too small, the first gap is thinner than the concave portion 120, and it is difficult for the sealing member 300 and the injection-molded member 400 to extend into the first gap, which will reduce the sealing property and injection connection stability between the end cover 100 and the electrode terminal 200. If the ratio of H3/H4 is too large, the concave portion 120 is thinner than the first gap, and the concave portion 120 cannot achieve a better receiving effect on the electrode terminal 200 and the injection-molded member 400.

Therefore, H3/H4 is set to be within the above range to ensure the receiving effect on the electrode terminal 200 and the injection-molded member 400, and ensure the sealing and injection connection effect between the end cover 100 and the electrode terminal 200.

Optionally, the sealing member 300 is of an independent structure, and the sealing member 300 is mounted on the end cover 100. Since the sealing member 300 is set to be of the independent structure, it can be convenient to mount the sealing member 300 on the end cover 100, or the sealing members 300 with different sizes can be adapted according to the injection-molded member 400 to avoid the contact between the injection-molded member 400 and the sealing member 300.

The present disclosure further discloses an energy storage device, comprising a housing, an electrode assembly and an end cover assembly. One end of the housing has an opening. The electrode assembly is accommodated in the housing. The end cover assembly hermetically covers the opening of the housing. The energy storage device may be a battery cell, a battery pack, and the like.

Optionally, the energy storage device may further comprise a connection sheet 800. The connection sheet 800 is used for electrically connecting the electrode terminal 200 with the electrode assembly. The connection sheet 800 is accommodated in the housing. The connection sheet 800 is provided with a convex portion. The convex portion passes through the outlet hole 110 and is electrically connected with the electrode terminal 200, thereby realizing transmission of electric energy in the energy storage device.

The present disclosure further discloses electrical equipment, comprising an energy storage device. The electrical equipment may be an electric automobile, which will not be described in detail here again.

It should be finally noted that the above various embodiments are only used to describe the technical solutions of the present disclosure, and not intended to limit the present disclosure. Although the present disclosure has been described in detail with reference to the foregoing embodiments, those ordinarily skilled in the art should understand that they can still modify the technical solutions described in all the foregoing embodiments, or equivalently replace some or all of the technical features, and these modifications or replacements do not depart the essences of the corresponding technical solutions from the spirit and scope of the technical solutions of all the embodiments of the present disclosure.

**Claims**

1. An end cover assembly, **characterized in that** the end cover assembly comprises:

   an end cover (100) provided with a through outlet hole (110) penetrating therethrough; an electrode terminal (200) arranged on a side of the end cover (100), wherein a projection, on the end cover (100), of the electrode terminal (200) along a thickness direction of the end cover covers the outlet hole (110), and wherein a first gap surrounding the outlet hole (110) is formed between the electrode terminal (200) and the end cover (100); a sealing member (300) comprising a first sealing portion (310), wherein the first sealing portion (310) fills a side of the first gap close to the outlet hole (110); an injection-molded member (400) comprising a first injection-molded portion (410), wherein the first injection-molded portion (410) fills a side of the first gap away from the outlet hole (110); and a second gap (500) formed between the first sealing portion (310) and the first injection-molded portion (410).

2. The end cover assembly according to claim 1, **characterized in that** along a radial direction of the electrode terminal (200), a size of the first gap is D1, and a size of the second gap (500) is D2, and

$$0.2 \leq D2/D1 \leq 0.3.$$

3. The end cover assembly according to claim 2, **characterized in that** along the radial direction of the electrode terminal (200), 1.1 mm<D2<1.3 mm.

4. The end cover assembly according to any one of claims 1 to 3, **characterized in that**,

   an edge of the side of the first gap close to the outlet hole (110) is provided with a first protrusion (600), and the first protrusion (600) is connected to the end cover (100); a second protrusion (700) is arranged in the second gap (500), and the second protrusion (700) is connected to the end cover (100) and/or the electrode terminal (200); and the first sealing portion (310) is located between the first protrusion (600) and the second protrusion (700).

5. The end cover assembly according to claim 4, **characterized in that** along an axial direction of the electrode terminal (200), a size of the first protrusion (600) is H1, and a size of the second protrusion (700) is H2, wherein 0.1 mm<H1<0.3 mm, and 0.1 mm<H2<0.3 mm.

6. The end cover assembly according to any one of claims 1 to 3, **characterized in that**, the sealing member (300) further comprises a second sealing portion (320);

   the second sealing portion (320) and the first sealing portion (310) are integrated formed by injection molding; and the second sealing portion (320) abuts against an inner surface of the outlet hole (110).

7. The end cover assembly according to claim 6, **characterized in that**, wherein along the thickness direction of the end cover (100), an end of the second sealing portion (320) away from the first sealing portion (310) is extended out of the outlet hole (110).

8. The end cover assembly according to any one of claims 1 to 3, **characterized in that**,

   the injection-molded member (400) further comprises a second injection-molded portion (420); the second injection-molded portion (420) and the first injection-molded portion (410) are integrated formed by injection molding; and the second injection-molded portion (420) surrounds a peripheral surface of the electrode terminal (200).

9. The end cover assembly according to claim 8, **characterized in that**,

   a concave portion (120) is formed in a surface of a side of the end cover (100) that faces the electrode terminal (200), and the outlet hole (110) is formed in a bottom of the concave portion (120); and projections, on the end cover (100), of the electrode terminal (200) and the injection-molded member (400) along the thickness direction of the end cover (100) are located in the concave portion (120), so that the first gap is reserved between the electrode terminal (200) and the bottom of the concave portion (120).

10. The end cover assembly according to claim 9, **characterized in that**, wherein in the thickness direction of the end cover (100), a ratio of a thickness H3 of the first gap to a depth H4 of the concave portion (120) is:

$$0.5 \leq H3/H4 \leq 0.8.$$

11. The end cover assembly according to claim 1, **characterized in that** the sealing member (300) is of an independent structure, and the sealing member (300) is mounted on the end cover (100).

12. An energy storage device, **characterized in that** the energy storage device comprises:

a housing having an opening at an end thereof;
an electrode assembly accommodated in the housing; and
an end cover assembly according to any one of claims 1 to 11, the end cover assembly hermetically covers the opening of the housing.

13. The energy storage device according to claim 12, **characterized in that** the energy storage device further comprises a connection sheet (800), wherein:

the connection sheet (800) is configured to electrically connect an electrode terminal (200) with the electrode assembly;
the connection sheet (800) is accommodated in the housing; and
the connection sheet (800) is provided with a convex portion; the convex portion passes through the outlet hole (110) and is electrically connected with the electrode terminal (200).

14. An electrical equipment, **characterized in that** the electrical equipment comprises an energy storage device according to claim 12 or 13.

FIG. 1

FIG. 2

FIG. 3

**FIG. 4**

**FIG. 5**

## INTERNATIONAL SEARCH REPORT

| International application No. |
|---|
| **PCT/CN2023/130946** |

**A.     CLASSIFICATION OF SUBJECT MATTER**

H01M50/15(2021.01)i;  H01M50/184(2021.01)i;  H01M50/188(2021.01)i

According to International Patent Classification (IPC) or to both national classification and IPC

**B.     FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 盖, 电极端子, 密封, 注塑成型, 间隙, lid, electrode terminal, seal, injection moulding, gap

**C.     DOCUMENTS CONSIDERED TO BE RELEVANT**

| Category* | Citation of document, with indication, where appropriate, of the relevant passages | Relevant to claim No. |
|---|---|---|
| PX | CN 115566332 A (SHENZHEN HAIRUN NEW ENERGY TECHNOLOGY CO., LTD. et al.) 03 January 2023 (2023-01-03) description, paragraphs 31-62, and figures 1-5 | 1-14 |
| PX | CN 116487779 A (NINGDE CONTEMPORARY AMPEREX TECHNOLOGY CO., LTD.) 25 July 2023 (2023-07-25) description, paragraphs 56-121, and figures 1-6 | 1, 8-9, 11-12, 14 |
| X | CN 109428016 A (NINGDE CONTEMPORARY AMPEREX TECHNOLOGY CO., LTD.) 05 March 2019 (2019-03-05) description, paragraphs 2 and 72-102, and figures 1-5 | 1-14 |
| X | CN 211045490 U (NINGDE CONTEMPORARY AMPEREX TECHNOLOGY CO., LTD.) 17 July 2020 (2020-07-17) description, paragraphs 69-126, and figures 1-15 | 1-14 |
| X | CN 110048037 A (SUNWODA ELECTRONIC CO., LTD.) 23 July 2019 (2019-07-23) description, paragraphs 2 and 41-51, and figures 1-12 | 1-14 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 February 2024** | **22 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/130946**

**C.     DOCUMENTS CONSIDERED TO BE RELEVANT**

| Category* | Citation of document, with indication, where appropriate, of the relevant passages | Relevant to claim No. |
|---|---|---|
| X | CN 215911490 U (SVOLT ENERGY TECHNOLOGY CO., LTD.) 25 February 2022 (2022-02-25) description, paragraphs 2 and 37-68, and figures 1-7 | 1-14 |
| A | KR 20140078812 A (LG CHEMICAL LTD.) 26 June 2014 (2014-06-26) entire document | 1-14 |

**INTERNATIONAL SEARCH REPORT**
Information on patent family members

International application No.

**PCT/CN2023/130946**

| Patent document cited in search report | | | Publication date (day/month/year) | Patent family member(s) | | | Publication date (day/month/year) |
|---|---|---|---|---|---|---|---|
| CN | 115566332 | A | 03 January 2023 | CN | 115566332 | B | 14 April 2023 |
| CN | 116487779 | A | 25 July 2023 | WO | 2023134422 | A1 | 20 July 2023 |
| CN | 109428016 | A | 05 March 2019 | CN | 109428016 | B | 18 May 2021 |
| CN | 211045490 | U | 17 July 2020 | None | | | |
| CN | 110048037 | A | 23 July 2019 | None | | | |
| CN | 215911490 | U | 25 February 2022 | None | | | |
| KR | 20140078812 | A | 26 June 2014 | KR | 101544703 | B1 | 17 August 2015 |

Form PCT/ISA/210 (patent family annex) (July 2022)

**EP 4 618 267 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211416056